# EUROPEAN PATENT APPLICATION

(11) **EP 1 494 369 A2**
(43) Date of publication of application: **05.01.2005**
(21) Application number: 04253960.1
(22) Date of filing: 30.06.2004
(51) Int. Cl.: H04B 7/08

(54) **Multipath wave receiver**

(30) Priority: 04.07.2003 JP 2003192233
(71) Applicant: Kabushiki Kaisha Toshiba, Tokyo 105-8001 (JP)
(72) Inventor: Tanabe, Yasuhiko, c/oToshiba Corporation, Tokyo 105-8001 (JP); Kuniaki, Ito, c/oToshiba Corporation, Tokyo 105-8001 (JP)
(74) Representative: Midgley, Jonathan Lee

(57) **Abstract**

A controller (50) controls weighting factors of received signals of combining units (100, 110), such that impairment included in an output signal of the combining unit (100) and impairment included in an output signal of the combining unit (110) are mutually uncorrelated and that the combining units (100, 110) strongly receive different multipath signals which arrive at different propagation delay timing. Soft output decoders (30, 31) perform decoding by iterating soft output detection on the basis of the outputs of the combining units (100, 110) and results of mutual soft output detection, to enhance the reliability of likelihood information about the detected signal discrimination. After that, a hard output decoder (40) performs hard output.

## Description

This invention relates to a receiving apparatus for radio communication and, more particularly, to a receiving apparatus suitable for a radio communication system for receiving a multipath wave by an array antenna.

In a multipath environment, waveform distortion due to intersymbol interference, which is caused by propagation delay difference between each multipath signals, becomes a serious factor for deterioration in communication quality.

To prevent this distortion, space-time equalizer, which consists of plural combining units and multi-input maximum likelihood sequence estimation, have been proposed (for example, M. Fujii, "Path diversity reception employing steering vector arrays and sequence estimation techniques for ISI channels," IEEE J. Select. Areas Commun., Vol. 17, No. 10, pp. 1735-1746, Oct. 1999).

In this scheme, however, since correlation among impairment signals at output of each combining unit is not uncorrelated,, the advantage cannot be sufficiently obtained from the multi-input maximum likelihood sequence estimation and decoding cannot be performed with high accuracy.

The present invention has been accomplished to solve the problem. An object of the present invention is to provide a receiving apparatus and a receiving circuit capable of effectively utilizing multipath wave power and performing decoding with high accuracy.

According to an aspect of the present invention, there is provided a receiving apparatus comprising a plurality of receiving units configured to receive radio signals, a first combining unit configured to weight the plurality of received signals output from the plurality of receiving units, add up the weighted received signals and output a combining result, a second combining unit configured to weight the plurality of received signals output from the plurality of receiving units, add up the weighted received signals and output a combining result, a controller configured to control weighting factors of the first combining unit and weighting factors of the second combining unit, a first soft output unit configured to obtain likelihood of information included in the received signals on the basis of the output of the first combining unit, a second soft output unit configured to obtain likelihood of the information included in the received signals on the basis of the likelihood obtained by the first soft output unit and the output of the second combining unit and a hard output unit configured to decode the information included in the received signals on the basis of the likelihood obtained by the second soft output unit.

According to another aspect of the present invention, there is provided a receiving circuit comprising a first combining unit configured to weight a plurality of received signals obtained by a plurality of receiving units, add up the weighted received signals and output an addition result, a second combining unit configured to weight the plurality of received signals, add up the weighted received signals and output a combining result, a controller configured to control weighting factors of the first combining unit and weighting factors of the second combining unit, a first soft output unit configured to obtain likelihood of information included in the received signals on the basis of the output of the first combining unit, a second soft output unit configured to obtain likelihood of the information included in the received signals on the basis of the likelihood obtained by the first soft output unit and the output of the second combining unit and a hard output unit configured to decode the information included in the received signals on the basis of the likelihood obtained by the second soft output unit.

In the present invention, the first combining unit adds up a plurality of weighted received signals and the second combining unit also adds up a plurality of weighted received signals. The first soft output unit obtains the likelihood of the information included in the received signals on the basis of the addition result of the first combining unit. The second soft output unit obtains the likelihood of the information included in the received signals on the basis of the likelihood obtained by the first soft output unit and the addition result of the second combining unit. The information included in the received signals is decoded on the basis of the likelihoods.

Therefore, the present invention can provide a receiving apparatus, a receiving circuit and a receiving method capable of obtaining the likelihood of the information included in the received signals by each of the first soft output unit and the second soft output unit, and decoding the information on the basis of the likelihoods with high accuracy.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a receiving apparatus according to a first embodiment of the present invention;
FIG. 2 is an illustration showing array directivity of the receiving apparatus shown in FIG. 1;
FIG. 3 is a flowchart showing operations of the receiving apparatus shown in FIG. 1;
FIG. 4 is a block diagram showing a receiving apparatus according to a second embodiment of the present invention; and
FIG. 5 is a graph showing frequency characteristics of a received signal in the receiving apparatus shown in FIG. 4.

Embodiments of the present invention will be explained below with reference to the accompanying drawings.

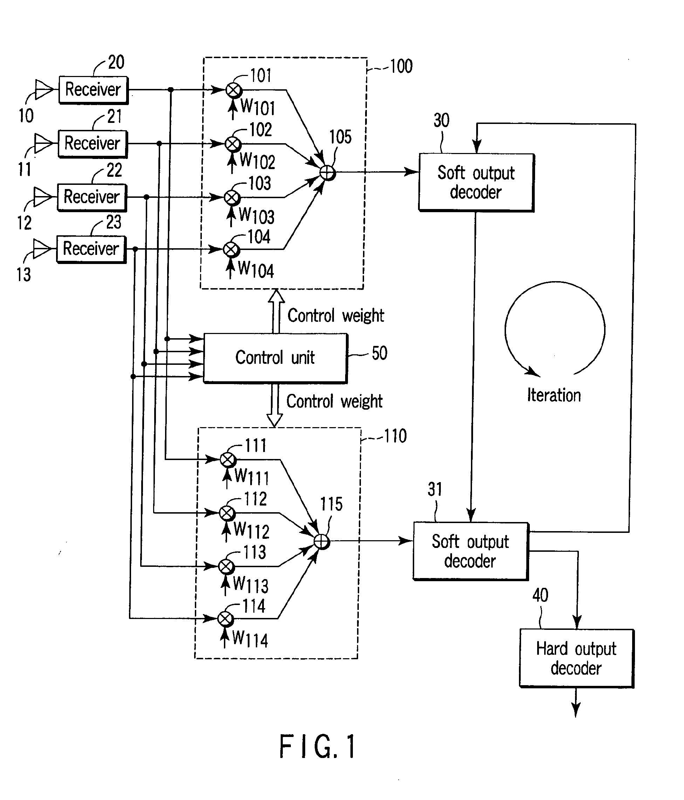

FIG. 1 shows a receiving apparatus according to a first embodiment of the present invention. The receiving apparatus comprises antenna elements 10 to 13, receivers 20 to 23, combining units 100, 110, soft output decoders 30, 31, a hard output decoder 40, and a control unit 50. The combining unit 100 comprises multipliers 101 to 104 corresponding to the antenna elements 10 to 13, respectively, and an adder 105. Similarly, the combining unit 110 comprises multipliers 111 to 114 corresponding to the antenna elements 10 to 13, respectively, and an adder 115.

The antenna elements 10 to 13 may be directional antennas or non-directional antennas. The antenna elements only have to be designed to receive a radio wave arriving in a desired frequency band. The number of antenna elements is four in this embodiment, but is not limited to this.

The receivers 20 to 23 are general receivers comprising frequency converters, filters, amplifiers, AGCs (automatic gain controls), AFCs (automatic frequency controls), A/D converters and the like. The receivers 20 to 23 convert analog signals received by the antenna elements 10 to 13 into digital signals, respectively. The digital signals obtained by the receivers 20 to 23 are outputs to the combining units 100, 110, and the control unit 50.

The multipliers 101 to 104 are given weighting factors w101 to w104, respectively, by the control unit 50, multiply the digital signals output from the receivers 20 to 23 corresponding to the multipliers 101 to 104 by the weighting factors w111 to w114, and output the multiplication results to the adder 105. The adder 105 adds up the multiplication results obtained from the multipliers 101 to 104 and outputs the addition result to the soft output decoder 30.

Similarly, the multipliers 111 to 114 are given weighting factors w111 to w114, respectively, by the control unit 50, multiply the digital signals output from the receivers 20 to 23 corresponding to the multipliers 111 to 114 by the weighting factors w111 to w114, and output the multiplication results to the adder 115. The adder 115 adds up the multiplication results obtained from the multipliers 111 to 114 and outputs the combining result to the soft output decoder 31.

The control unit 50 dynamically calculates the weighting factors w101 to w104 and w111 to w114 on the basis of the digital signals input from the receivers 20 to 23 and sets the weighting factors in the multipliers 101 to 104 and 111 to 114, respectively.

The soft output decoder 30 performs soft output on the basis of the addition result of the adder 105 and an output of the soft output decoder 31 to be described later to detect the likelihood of the received data and outputs the detected likelihood to the soft output decoder 31. Similarly, the soft output decoder 31 performs soft output on the basis of the addition result of the adder 115 and an output of the soft output decoder 30 to detect the likelihood of the received data and outputs the detected likelihood to the soft output decoder 30.

If the discrimination of the soft output decoder 30 and the discrimination of the soft output decoder 31 are iterated at a predetermined number of times, the likelihood obtained by the soft output decoder 31 is output to the hard output decoder 40. The hard output decoder 40 discriminates "0/1" of the received data by unit of bit on the basis of the likelihood supplied from the soft output decoder 31.

Next, operations of the receiving apparatus having the above-described structure will be described.

The signals received by the receivers 20 to 23 are converted into the digital signals, which are output to the multipliers 101 to 104 and 111 to 114 corresponding to the receivers 20 to 23 and the control unit 50.

The control unit 50 analyzes the digital signals and calculates the weighting factors w101 to w104 and w111 to w114 to be set in the multipliers 101 to 104 and 111 to 114, such that impairment included in the output signal of the combining unit 100 and impairment included in the output signal of the combining unit 110 are mutually uncorrelated and that the combining units 100 and 110 strongly receive the different multipath signals which arrive at different delay timing.

As an example of the calculation, there is no cochannel interference wave and the impairment is merely thermal noises generated independently by the respective antenna elements. In this case, the eigen vector corresponding to the maximum eigen value of a correlation matrix obtained from the digital signals is set in the combining unit 100 and the eigen vector corresponding to the second largest eigen value of the correlation matrix is set in the combining unit 110. Thus, the above-described weighting factors can be set.

The setting method of the weighting factors is not limited to this, but may be the other method if it makes no correlation between the impairment included in the output signal of the combining unit 100 and the impairment included in the output signal of the combining unit 110 and if it allows the combining units 100 and 110 to strongly receive the different multipath signals which arrive at different delay time.

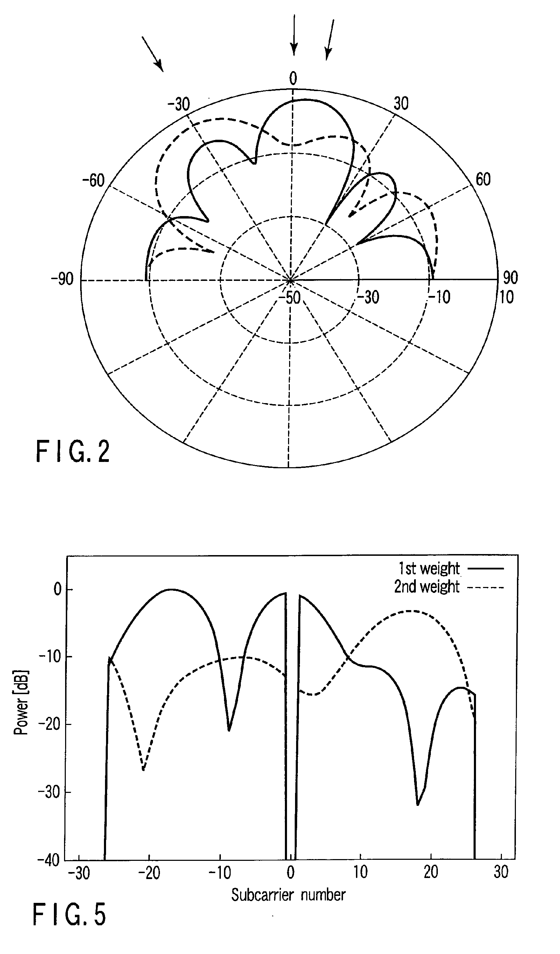

FIG. 2 shows array directivity in a case where the above-described weighting is performed by the combining units 100 and 110 when three wave signals arrive from three directions at different propagation delay timings. In the figure, a solid line represents the array directivity obtained by the weighting factors w101 to w104 set in the combining unit 100. A broken line represents the array directivity obtained by the weighting factors w111 to w114 set in the combining unit 110. Arrows represent directions of 0, 10, and -30 degrees, i.e. the directions of the three signals arriving at different propagation delay timings. In the shown case, the array antenna is a half length linear array of four antenna elements 10 to 13.

According to the array directivity represented by the solid line, beams are directed in directions of 0 and 10 degrees and weighting is performed to strongly receive the signals. However, gain in the direction of - 30 degrees is smaller by about 10 dB than the gains in the directions of 0 and 10 degrees. The signal of the direction of -30 degrees is not received so strongly.

On the other hand, according to the array directivity represented by the broken line, weighting is performed to strongly receive the signals by directing the beam in the direction of -30 degrees, unlike the array directivity of the solid line. The signals which cannot be strongly received with the array directivity of the sold line can be received strongly. Thus, if the combining units 100 and 110 perform different weighting, the signals which cannot be received with single weighting can be received strongly.

Since different eigenvectors are orthogonal, impairment in the output signals of the combining units 100 and 110 are mutually uncorrelated. Moreover, the different multipath signals are received strongly and output to the output decoders 30 and 31, respectively.

The soft output decoder 30 detects the likelihood of the received data on the basis of the output of the combining unit 100 and the soft output decoder 31 and outputs the detected likelihood to the soft output decoder 31 as the soft output. Similarly, the soft output decoder 31 detects the likelihood of the received data on the basis of the output of the combining unit 110 and the soft output decoder 30 and outputs the detected likelihood to the soft output decoder 30 as the soft output. The soft output does not limit "0" or "1" of the code, but represents "0" or "1" of reliability in signal detection.

Since the combining units 100 and 110 receive a plurality of signals which arrive at different delay time each other, there is the intersymbol interference in the outputs of combining units. For this reason, the soft output decoders 30 and 31 have a constraint length determined in accordance with a difference in maximum propagation delay timing between the signals received by the combining units 100 and 110.

An example of the scheme of detecting the soft output in the soft output decoders 30 and 31 is detection of Maximum A Posteriori probability (MAP). In this scheme, the code whose probability of transmission from the received signal is maximum is discriminated as a transmitted code. This scheme is known as a scheme of minimizing the code error rate and employed in the decoding of performing iteration of Turbo decoding and the like.

The soft output decoders 30 and 31 perform decoding by iterating soft output detection using the outputs of the combining units 100 and 110 and the results of mutual soft output detection.

In the decoding performed between the soft output decoders 30 and 31, the soft output decoder 30 detects the likelihood (soft output) by using the signal output from the combining unit 100 and the signal output from the soft output decoder 31, in the first step. In the initial stage, however, since the output from the soft output decoder 31 cannot be obtained, the output signal of the combining unit 100 alone is used.

In the second step, the soft output decoder 31 detects the likelihood by using the signal output from the soft output decoder 30 and the signal output from the combining unit 100.

After these two steps are iterated at a predetermined number of times, the hard output decoder 40 discriminates "0/1" of the received data by unit of bit on the basis of the likelihood of signal discrimination output from the soft output decoder 31 to obtain the received data. After that, the data is regenerated and output by a data regeneration circuit (not shown).

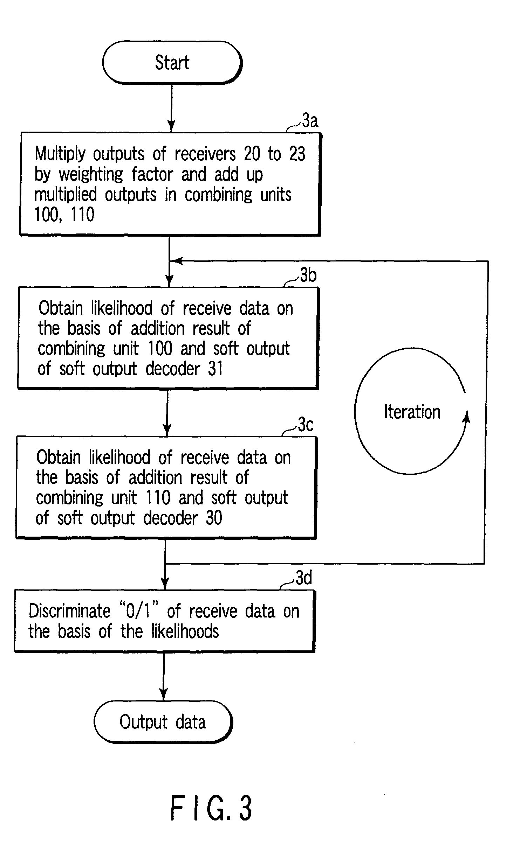

To sum up, first, each of the combining units 100 and 110 multiplies the outputs of the receivers 20 to 23 by the weighting factor and adds up the outputs as shown in FIG. 3 (step 3a). The weighting factor is controlled by the control unit 50.

The soft output decoder 30 detects the likelihood of the received data by performing the soft output on the basis of the addition result of the combining unit 100 and the output of the soft output decoder 31, and outputs the detected likelihood to the soft output decoder 31 (step 3b).

Similarly, the soft output decoder 31 detects the likelihood of the received data by performing the soft output on the basis of the addition result of the combining unit 110 and the output of the soft output decoder 30, and outputs the detected likelihood to the soft output decoder 30 (step 3c). Steps 3b and 3c are iterated at a plurality of times if necessary.

The hard output decoder 40 discriminates "0/1" of the received data by unit of bit, on the basis of the likelihood obtained by the soft output decoder 31 (step 3d).

In the receiving apparatus having the above-described structure, each of the soft output decoders 30 and 31 obtains the likelihood about the information included in the received signal, and the information is decoded on the basis of the likelihoods. Therefore, decoding can be performed with high accuracy.

In addition, weighting about the received signals of the combining units 100 and 110 is performed such that the combining units 100 and 110 can strongly or mainly receive the different multipath signals which arrive a different delay timing.

Since signal reception effectively using the electric power of the multipath wave can be performed, decoding can be performed with high accuracy.

Moreover, the soft output decoders 30 and 31 perform decoding by iterating the soft output detection by using the outputs of the combining units 100 and 110 and the results of mutual soft output detection.

Therefore, reliability of the likelihood information of the signal discrimination detected by the soft output decoders 30 and 31 can be increased, and decoding can be performed with high accuracy.

The Turbo code is known as an encoding scheme of implementing such decoding. The Turbo code inputs signals to a plurality of encoders via an interleaver, multiplexes a plurality of encoding signals and transmits the multiplexed signals.

The present invention is different from the Turbo code since the present invention requires no encoders. In the present invention, a plurality of received signals are obtained in the propagation path in which the intersymbol interference occurs by a plurality of combining units (100, 110). The control unit 50 operates to make different impulse responses in the outputs of the combining units.

Therefore, reliability of different signals is increased and the same advantage as connected encoding employing an interleaver with the Turbo code can be obtained, in the soft output decoders 30 and 31. Thus, the same advantage as that in a case of receiving signals with a plurality of weights and transmitting them with a plurality of encoders, can be obtained.

In the scheme disclosed in M. Fujii, "Path diversity reception employing steering vector arrays and sequence estimation techniques for ISI channels," IEEE J. Select. Areas Commun., Vol. 17, No. 10, pp. 1735-1746, Oct. 1999, the maximum likelihood sequence estimation is performed by using signals obtained from a plurality of combining units. If the probability of signal generation is equal, an equivalent decoding result of MAP detection can be obtained from the maximum likelihood sequence estimation. However, if the probability of signal generation is varied, the characteristics are deteriorated in the maximum likelihood sequence estimation as compared with the MAP detection. In the conventional scheme, since correlation is made in the impairment included in the output of each combining unit, the maximum likelihood sequence estimation cannot be effectively performed. In addition, the characteristics are deteriorated. On the other hand, deterioration of the characteristics can be prevented in the receiving apparatus having the above-described structure.

In the above-described embodiment, MAP has been explained as the soft output detection scheme employed in the soft output decoders 30 and 31. However, soft output MAP detection can be applied as the other soft output detection scheme, and BCJR, Max-Log-MAP, SOVA (Soft Output Viterbi Algorithm) and the like can be applied as typical schemes of approximating the soft output. The soft output detection scheme in the present invention may be any of three algorithms explained above. In addition, the soft output detection of the present invention is not limited to three algorithms explained above, but can be the other scheme.

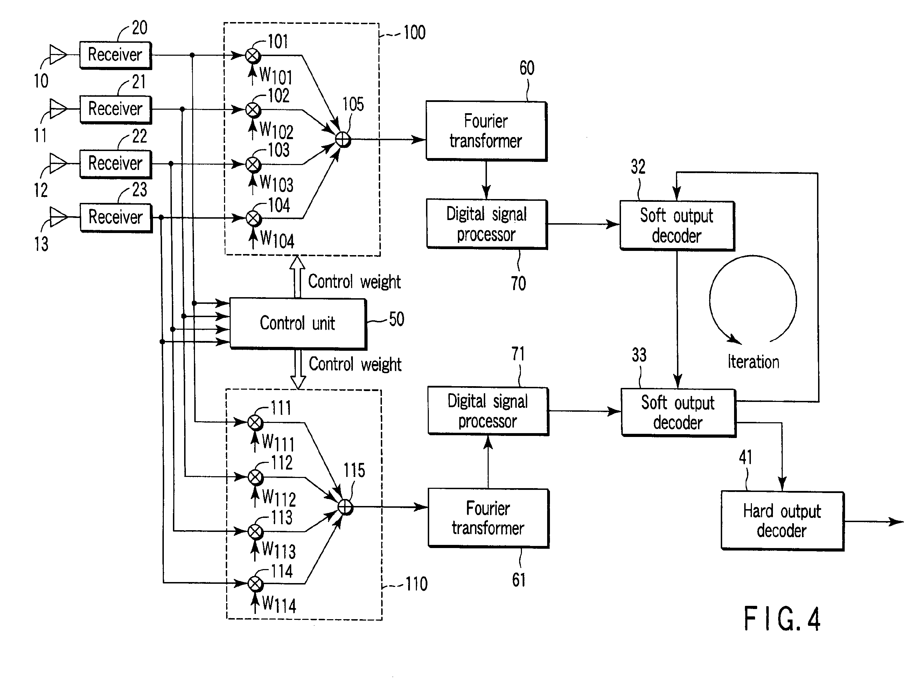

Next, a receiving apparatus according to a second embodiment of the present invention will be described. FIG. 4 shows a structure of the receiving apparatus. The receiving apparatus of the second embodiment employs the multi-carrier transmission scheme and is thus different from that of the first embodiment. An example of the multi-carrier transmission scheme is OFDM (Orthogonal Frequency Division Multiplex) scheme.

For this reason, the receiving apparatus of the second embodiment comprises a Fourier transformer 60 and a digital signal processor 70 between the combining unit 100 and the soft output decoder 30, and a Fourier transformer 61 and a digital signal processor 71 between the combining unit 110 and the soft output decoder 31, as well as the constituent elements of the receiving apparatus of the first embodiment. The differences to the receiving apparatus of the first embodiment are mainly explained below.

The Fourier transformer 60 transforms a signal of time domain into a signal of frequency domain as the output of the combining unit 100 and outputs the signal to the digital signal processor 70. The Fourier transformer 61 transforms a signal of time domain into a signal of a frequency domain as the output of the combining unit 110 and outputs the signal to the digital signal processor 71.

In the OFDM scheme, a discrete signal of time domain is transformed into a signal of frequency domain by Discrete Fourier Transform (DFT) or Fast Fourier Transform (FFT) to perform demodulation. In the present invention, any one of DFT and FFT may be employed.

The digital signal processor 70 obtains a channel reply of each carrier from the output of the Fourier transformer 60 and demodulates a signal of each subcarrier. If the signal is subjected to convolutional encoding and a code term is interleaved, the digital signal processor 70 needs to perform deinterleaving.

If convolutional encoding and interleaving are performed and multivalued modulation such as QAM is executed, the digital signal processor 70 needs to output a soft output value of each bit from the received signal and the channel reply. Furthermore, if the signal is scrambled, the digital signal processor 70 needs to perform descrambling In this embodiment, digital signal processor 70 performs these processings as occasion requires.

The digital signal processor 71 performs the same processings about the output of the Fourier transformer 61. The signal processed by the digital signal processor 70 is output to the soft output decoder 32 and the signal processed by the digital signal processor 71 is output to the soft output decoder 33.

The soft output decoder 32 performs soft output on the basis of the output of the digital signal processor 70 and the output of the soft output decoder 33, detects the likelihood of the received data and outputs the detected likelihood to the soft output decoder 33. Similarly, the soft output decoder 33 performs soft output on the basis of the output of the digital signal processor 71 and the output of the soft output decoder 32, detects the likelihood of the received data and outputs the detected likelihood to the soft output decoder 32.

When the discrimination of the soft output decoder 32 and the discrimination of the soft output decoder 33 are iterated at a predetermined number of times, the likelihood obtained by the soft output decoder 33 is output to a hard output decoder 41. The hard output decoder 41 discriminates "0/1" of the received data by unit of bit on the basis of the likelihood received from the soft output decoder 33.

FIG. 5 shows an example of the frequency characteristics of the received signals obtained by the combining units 100 and 110. The horizontal axis represents the number of the subcarrier and the vertical axis represents power. Subcarrier 0 corresponds to a DC component and is not used in this example. A solid line represents the frequency characteristic of the received signal obtained by the combining unit 100. A broken line represents the frequency characteristic of the received signal obtained by the combining unit 110.

As understood from the solid line relating to the received signal of the combining unit 100, the power becomes small near subcarrier "18" and subcarrier "-9". Demodulation accuracy of the signal transmitted by the subcarriers is deteriorated. On the other hand, it is understood in relation to the received signal of the combining unit 110 that the power becomes greater near subcarrier "18" and subcarrier "-9".

In other words, if the receiving apparatus having the above-described structure is applied to the multi-carrier transmission scheme, the combining units 100 and 110 can implement decoding with high accuracy by strongly receiving different subcarrier signals and mutually receiving the reliability information obtained from demodulation of the subcarrier signals. If the signals are associated with a plurality of subcarriers similarly to the convolutional codes, the combining units 100 and 110 can gradually enhance the decoding accuracy by performing the iteration.

The present invention is not limited to the embodiments described above and can be obtained by modifying the constituent elements within the spirit and scope of the invention. Various aspects of the invention can also be extracted from any appropriate combination of a plurality of constituent elements disclosed in the embodiments. Some of the constituent elements, for example, can be deleted in all of the constituent elements disclosed in the embodiments. Moreover, the constituent elements disclosed in different embodiments can be combined in appropriate manners.

In the first and second embodiments, for example, the received signals of the receivers 20 to 23 are weighted by two combining units 100 and 110. However, three or more combining units may be provided to weight the signals, such that the impairment included in the output signals of each combining unit are mutually uncorrelated and that the combining units can strongly receive the different multipath signals which arrive at different delay time each other.

Moreover, the combining units 100 and 110, the soft output decoders 30 and 31, the hard output decoder 40 and the control unit 50 can be implemented on a single DSP (digital signal processor) chip, in the first embodiment. Similarly, the combining units 100 and 110, the soft output decoders 32 and 33, the hard output decoder 41, the control unit 50, the Fourier transformers 60 and 61, and the digital signal processors 70 and 71, can be implemented on a single DSP chip, in the second embodiment. Thus, the received circuit can be formed with a DSP chip.

Otherwise, the present invention is not limited to the embodiments described above and can be modified in various manners without departing from the spirit and scope of the invention.

## Claims

1. A receiving apparatus **characterized by** comprising:
a plurality of receiving units (20) configured to receive radio signals;
a first combining unit (100) configured to weight the plurality of received signals output from the plurality of receiving units, add up the weighted received signals and output a combining result;
a second combining unit (110) configured to weight the plurality of received signals output from the plurality of receiving units, add up the weighted received signals and output a combining result;
a controller (50) configured to control weighting factors of the first combining unit and weighting factors of the second combining unit;
a first soft output unit (30) configured to obtain likelihood of information included in the received signals on the basis of the output of the first combining unit;
a second soft output unit (31) configured to obtain likelihood of the information included in the received signals on the basis of the likelihood obtained by the first soft output unit and the output of the second combining unit; and
a hard output unit (40) configured to decode the information included in the received signals on the basis of the likelihood obtained by the second soft output unit.

2. The receiving apparatus according to claim 1, **characterized in that** the controller controls weighting factors of the first combining unit and weighting factors of the second combining unit, such that impairment included in the output of the first combining unit and impairment included in the output of the second combining unit are mutually uncorrelated.

3. The receiving apparatus according to claim 1, **characterized in that** the controller controls weighting factors of the first combining unit and weighting factors of the second combining unit, such that each of the output of the first combining unit and the output of the second combining unit strongly receive different multipath signals which arrive at different delay time.

4. The receiving apparatus according to claim 1, **characterized in that** the controller controls weighting factors of the first combining unit and weighting factors of the second combining unit, such that impairment included in the output of the first combining unit and impairment included in the output of the second combining unit have no correlation with each other and that each of the output of the first combining unit and the output of the second combining unit includes signals different in propagation delay timing.

5. The receiving apparatus according to claim 1, **characterized in that** the first soft output unit obtains the likelihood of the information included in the received signals on the basis of the likelihood obtained by the second soft output unit and the output of the first combining unit,
the second soft output unit obtains the likelihood of the information included in the received signals on the basis of the likelihood obtained by the first soft output unit and the output of the second combining unit, and
the hard output unit decodes the information included in the received signals on the basis of the likelihood obtained by the second soft output unit after each of the first soft output unit and the second soft output unit iterates the operation of obtaining the likelihood at plural times.

6. A receiving circuit **characterized by** comprising:
a first combining unit (100) configured to weight a plurality of received signals obtained by a plurality of receiving units, add up the weighted received signals and output an addition result;
a second combining unit (110) configured to weight the plurality of received signals, add up the weighted received signals and output a combining result;
a controller (50) configured to control weighting factors of the first combining unit and weighting factors of the second combining unit;
a first soft output unit (30) configured to obtain likelihood of information included in the received signals on the basis of the output of the first combining unit;
a second soft output unit (31) configured to obtain likelihood of the information included in the received signals on the basis of the likelihood obtained by the first soft output unit and the output of the second combining unit; and
a hard output unit (40) configured to decode the information included in the received signals on the basis of the likelihood obtained by the second soft output unit.

7. The receiving circuit according to claim 6, **characterized in that** the controller controls weighting factors of the first combining unit and weighting factors of the second combining unit, such that impairment included in the output of the first combining unit and impairment included in the output of the second combining unit are mutually uncorrelated.

8. The receiving circuit according to claim 6, **characterized in that** the controller controls weighting factors of the first combining unit and weighting factors of the second combining unit, such that the first combining unit and the second combining unit receive different multipath signals which arrive at different delay time.

9. The receiving circuit according to claim 6, **characterized in that** the controller controls weighting factors of the first combining unit and weighting factors of the second combining unit, such that impairment included in the output of the first combining unit and impairment included in the output of the second combining unit are mutually uncorrelated and that the first combining unit and the second combining unit receive different multipath signals which arrive at different delay time.

10. The receiving circuit according to claim 6, **characterized in that** the first soft output unit obtains the likelihood of the information included in the received signals on the basis of the likelihood obtained by the second soft output unit and the output of the first combining unit,
the second soft output unit obtains the likelihood of the information included in the received signals on the basis of the likelihood obtained by the first soft output unit and the output of the second combining unit, and
the hard output unit decodes the information included in the received signals on the basis of the likelihood obtained by the second soft output unit after each of the first soft output unit and the second soft output unit iterates the operation of obtaining the likelihood at plural times.

11. A receiving method **characterized by** comprising:
(a) weighting a plurality of received signals obtained by a plurality of receiving units, adding up the weighted received signals and outputting a result of the combining (100);
(b) weighting the plurality of received signals, adding up the weighted received signals and outputting an combining result (110);
(c) obtaining likelihood of information included in the received signals on the basis of an combining result of the step (a) (30);
(d) obtaining likelihood of the information included in the received signals on the basis of the likelihood obtained in the step (a) and an combining result of the step (b) (31); and
(e) decoding the information included in the received signals on the basis of the likelihood obtained in the step (d) (40).

12. The receiving method according to claim 11, **characterized by** further comprising controlling weighting factors of the step (a) and weighting factors of the step (b), such that impairment included in the combining result of the step (a) and impairment included in the combining result of the step (b) are mutually uncorrelated (50).

13. The receiving method according to claim 11, **characterized by** further comprising controlling weighting of the step (a) and weighting of the step (b), such that each of the combining results of the step (a) and the step (b) receive different multipath signals which arrive at different delay time.

14. The receiving method according to claim 11, **characterized by** further comprising controlling weighting factors of the step (a) and weighting factors of the step (b), such that impairment included in the combining result of the step (a) and impairment included in the combining result of the step (b) are mutually uncorrelated and that each of the combining results of the step (a) and the step (b) receive different multipath signals which arrive at different delay time.

15. The receiving method according to claim 11, **characterized in that**
in the step (c), the likelihood of the information included in the received signals is obtained on the basis of the likelihood obtained in the step (d) and the combining result of the step (a),
in the step (d), the likelihood of the information included in the received signals is obtained on the basis of the likelihood obtained in the step (c) and the combining result of the step (b), and
in the step (e), the information included in the received signals is decoded on the basis of the likelihood obtained in the step (d) after the operation of obtaining the likelihood is iterated at plural times in each of the step (c) and the step (d).
